# EUROPEAN PATENT APPLICATION

(11) **EP 4 502 444 A1**
(43) Date of publication of application: **05.02.2025**
(21) Application number: 23306331.2
(22) Date of filing: 03.08.2023
(51) Int. Cl.: F16L 27/08, F16L 43/00, F16L 9/18

(54) **FLEXIBLE PIPE BEND FOR A TRANSFER LINE**

(71) Applicant: Nexans, 92400 Courbevoie (FR)
(72) Inventor: GÜNZEL, Gerald, 38159 VECHELDE (DE); EGERER, Ralf, 30659 HANNOVER (DE)
(74) Representative: Ipsilon

(57) **Abstract**

A pipe bend (200) for a transfer line for transferring fluid is suggested. The pipe bend comprises a pipe elbow section (201). Each end of the pipe elbow section is fluidly connected with a first and a second elastic pipe section (202,203). Each elastic pipe section (202,203) permits swiveling movements around a pair of two swivel axis which are not parallel to each other. At least three swivel axis of the two pairs of swivel axis (211-214) are not parallel to each other. The arrangement of the swivel axis allows for angular movements in three dimensions to compensate pitch, yaw, and roll movements of a vehicle connected to the pipe bend.

## Description

### Field

The present disclosure relates to a pipe bend for a transfer line for transferring fluid and to a transfer device including the pipe bend. Furthermore, the present disclosure relates to a loading arm with the transfer device.

### Background

In recent years, as the problem of global warming has intensified, efforts have been made to expand the use of natural energy sources (renewable energy sources) such as sunlight, wind power, hydropower, and geothermal power as energy sources to replace fossil fuels such as oil and natural gas. Natural energy is currently converted almost exclusively into electrical energy, but electricity cannot be stored in large quantities, and transportation losses are also large. Therefore, the possibility of using natural energy sources to produce and effectively use liquefied cryogenic hydrogen, which can be stored in large quantities and transported over long distances, has been investigated for several years.

Cryogenic media, also known as cryogenic fluids, are often transported on ships, in tanker wagons or on tanker trucks. Important examples include liquefied natural gas (LNG), which has an evaporating temperature of -162°C (111 K), liquid nitrogen with an evaporating temperature of -196°C (77 K), liquid hydrogen (evaporating temperature -253°C, 20 K) or liquid helium (evaporating temperature -269°C, 4 K). The transfer from one tank to another during loading is typically accomplished with vacuum insulated lines and couplings.

With this in mind, development of cryogenic liquid hydrogen transfer technologies is urgently needed. Various loading systems are used for the transfer of cryogenic liquefied gases from one tank to another tank, as it occurs during refueling from a storage tank to a fuel tank of a ship or vehicle or during loading and unloading of a transport ship or vehicle into a storage tank. The coupling assembly, the so called front-end, between the loading system and the vehicle has to be moveable in itself to adjust to the angular (roll, pitch and yaw) and translational movements of the vehicle e.g. a ship due to for instance waves or wind pressure.

To this end, conventional devices for transferring fluids comprise sections for compensating translational and angular movements. The present disclosure focuses on the compensation of angular movements since translational movements can readily be compensated by loading arms of transfer devices as disclosed e.g. in EP 23 305 099.6 as it is illustrated in Figure 1.

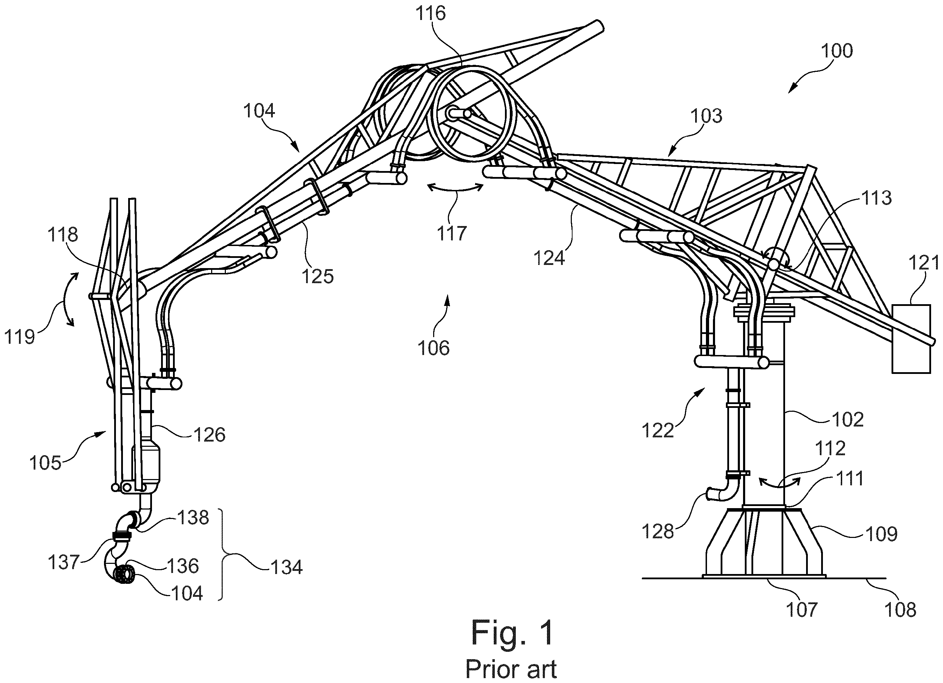

Figure 1 shows an illustrative example of the transfer device 100 The transfer device 100 comprises a support structure including a vertical portion, namely a vertical pillar 102, and a first, second, and third loading arm section 103-105. The loading arm sections 103-105 are strut like structures known in conventional steel construction. The entirety of the loading arm sections 103-105 is also referred to as loading device 106.

The pillar 102 has a base plate 107, which is firmly connected with the ground 108 of a mooring area. Reinforcement ribs 109 connect the base plate with the pillar 102 to ensure a stable stand of the pillar 102 on the mooring area. A base bearing 111 enables rotatable movement of the pillar 102 relative to the ground 108 of the mooring area as it is indicated by double headed arrow 112.

The first loading arm section 103 is a hinged on the pillar 102 by a first pivot joint 113. The pivotal movement of the first loading arm section 103 relative to the pillar 102 is indicated by double headed arrow 114. A distal end of the first loading arm section 103 is provided with a second pivot joint 116, which connects the first loading arm section 103 with the second loading arm section 104. The second pivot joint 116 permits a pivotable movement of the second loading arm section 104 relative to the first loading arm section 103 as it is indicated with double headed arrow 117. A distal end of the second loading arm section 104 has a third pivotable joint 118 pivotably connecting the second loading arm 104 with the third loading arm 105 section. The allowed movement of the third loading arm section 105 is symbolized by double headed arrow 119. The first loading arm 103 carries at the end opposite to the second pivot joint 116 a counterweight 121 for counter weighting at least partially the weight of the loading device 106 to reduce the leverage forces on the pillar 102.

The support structure 101 carries a transfer line 122 which extends from a lower end of the pivotable pillar 102 to the distal end of the loading device 106. The transfer line is for instance a vacuum insulated line attached to the loading device 106.

The rigid transfer line section 123 extending along the vertical pillar 102 has on one end an input coupling or entry flange 128, which is connected with a flexible supply line (not shown) supplying cryogenic fluid from a reservoir on land. The flexible supply line permits pivotable movement of the pillar 102 without requiring a rotatable seal or the like in the supply line or the rigid line section 123. The line section 123 continues with rigid transfer line sections 124-126 attached to loading arm sections 103-105 and interconnected with flexible line sections. The rigid line section 126 terminates with a front end 134 forming an output coupling that is directly connected with a coupling of the tank on a ship (not shown).

The base bearing 111 and the swivel joints 113, 116, and 118 connecting the loading arm sections 103-105 enable movements of the loading device 106 to compensate translational movements of the ship.

According to a current first solution, the front-end 134 consist of several pipe bends that are rotatably connected to each other by means of so-called swivel joints 136-138 as shown in Figure 1. The front end 134 is connected with the loading device 106 which enables translational movements of the front end in three dimensions. In addition to that, each swivel joint 136-138 enables rotational movement around one axis, which are oriented perpendicular to each other. As a result, the front-end 134 conjointly with the loading device compensate angular and translational movements of a ship to which it is connected.

A disadvantage of the front-end 134 is the use of swivel joints. In these devices the surfaces that move against each other have to be sealed in a complex way, which is disclosed for instance in EP 3 321 229 B1. However, it is not possible to maintain a complete seal at the swivel joints in the long term, especially not for cryogenic gases such as LH2 or LHe, due to, among other things, the low temperature, the small molecule or atom diameters and the low viscosity. But the tendency of swivel joints to be not completely tight is pertinent not only for cryogenic gases but also or other fluids to different degrees. Undesirable losses occur due to escaping gases and, in the case of flammable gases, there is a risk of inflammation and/or explosion, for example. Another disadvantage of the first solution is the many pipe bends. These cause a significant pressure loss in the transfer line. Furthermore, the first solution is only suitable for single wall transfer lines.

In an alternative transfer device, the front end is connected to the loading arm by means of a long hose capable of compensating movements of the coupling. However, a major disadvantage of the alternative transfer device is that a significant pressure drop occurs along the long hose. In addition to that, the coupling can start rocking uncontrollably and poses a risk to the environment. Furthermore, due to its flexibility the hose moves if the flow is changed abruptly. This causes stress in the hose itself and the connections as well pose a risk to the operators.

CN 112 096 987 A discloses a pipe arm connecting e.g. a floating ship with an onshore installation to transfer fluids between the ship and the onshore installation. During transfer, the ship has six degrees of freedom for movement. In a Cartesian coordinate system with X-, Y-, and Z-axis these are translational movements DX, DY, and DZ along and rotational movements RX, RY, and RZ around the X-, Y-, and Z-axis, respectively. Four degrees of freedom are compensated by universal hinges integrated in the pipe arm. The remaining two degrees of freedom are compensated by a rod constraint bellow expansion joint and an adjustment pipe. The loading arm comprises only a single wall piping.

In view of the limitations of existing transfer devices there remains a desire for a transfer device, and in particular for a front end, to overcome or at least improve one or more of the problems mentioned at the outset. In particular, a fluid tight transfer device capable of compensating swivel movements along three axis is highly desirable.

### Summary

According to a first aspect the present disclosure suggests a pipe bend for a transfer line for transferring fluid. The pipe bend comprises a pipe elbow section. Each end of the pipe elbow section is fluidly connected with a first and a second elastic pipe section. Each elastic pipe section permits swiveling movements around a pair of two swivel axis which are not parallel to each other. At least three swivel axis of the two pairs of swivel axis are not parallel to each other.

The arrangement of the swivel axis allows for angular movements in three dimensions to compensate pitch, yaw, and roll movements of a vehicle, in particular a ship. This is achieved with a single pipe elbow section which causes only a limited pressure drop in the transfer device. The elastic pipe sections function as a compensator for angular movements.

In an advantageous embodiment the first and the second elastic pipe sections are arranged between the elbow pipe section and a rigid pipe section. This arrangement of different sections of the pipe bend has constructive advantages because the pipe bend can be integrated easily in a transfer line.

In a useful embodiment at least one swivel axis of one elastic pipe section is perpendicularly oriented with respect to the swivel axis of the other elastic pipe section. Perpendicular arrangement off of the swivel axis permits for a maximum swivel movement enabled by the pipe bend. However, the swivel axis do not have to be perpendicularly oriented relative to each other.

In an advantageous embodiment at least one elastic pipe section comprises a bellow. Bellows consisting in the corrugated tube are gas tight by construction and remain it as long as the bellow is not damaged. This is particularly advantageous when it comes to the transfer of explosive or environmental hazardous media.

In a further development of the pipe bend, the elbow pipe section and an adjacent rigid pipe section a gimbal joint is arranged. The gimbal joint comprises two fixed flanges and a movable ring. One fixed flange of the gimbal joint is connected with the elbow pipe section and the other fixed flange of the gimbal joint is connected with the rigid pipe section.

The gimbal joints convey additional mechanical stability to the pipe bend without limiting its flexibility and thus its inability to compensate for angular movements of a vehicle connected to the pipe bend. In this way, very good mechanical stability and flexibility of the pipe bend is achieved at the same time. The gimbal joints absorb axial loads so that the compensators/bellows do not elongate and can tolerate higher internal pressure.

For some applications it has been found useful when the pipe bend is a multi-wall pipe bend, in particular a double-walled pipe bend. This embodiment is particularly advantageous when the transferred fluid is temperature sensitive, i.e. when the fluids should not cool down or warm up during transfer.

In some applications, especially when temperature sensitive fluids are involved it is advantageous when at least two elbow pipe sections are stacked into each other. Between the stacked together elbow pipe sections distance holders are arranged to keep the inner elbow pipe section in place.

In an embodiment adapted for use with multiwall transfer lines only the outmost wall of the pipe bend is connected with the fixed flanges of the gimbal joint.

According to a second aspect, the present disclosure relates to a transfer device for transferring fluid. The transfer device comprises a transfer line with a first and a second end being fixedly connected with a first and a second structure, respectively. The first and the second structure are movable relative to each other. The transfer line is configured to compensate for the relative movement of the first and second structure. The transfer line comprises a pipe bend according to the first aspect of the present disclosure. At least for this reason the transfer device realizes the same advantages as the pipe bend according to the first aspect does.

Finally, according to a third aspect, the present disclosure relates to a loading arm for transferring fluids between a first structure and a second structure comprising a transfer device according to the second aspect of the present disclosure.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a section of a conventional transfer device for compensating translational and rotational movements;
- Fig. 2A: a single wall pipe bend of a transfer device according to the present disclosure;
- Fig. 2B: a double wall pipe bend of a transfer device according to the present disclosure;
- Fig. 3A: a single wall pipe bend with integrated gimbals; and
- Fig. 3B: a double wall pipe bend with integrated gimbals.

### Detailed description

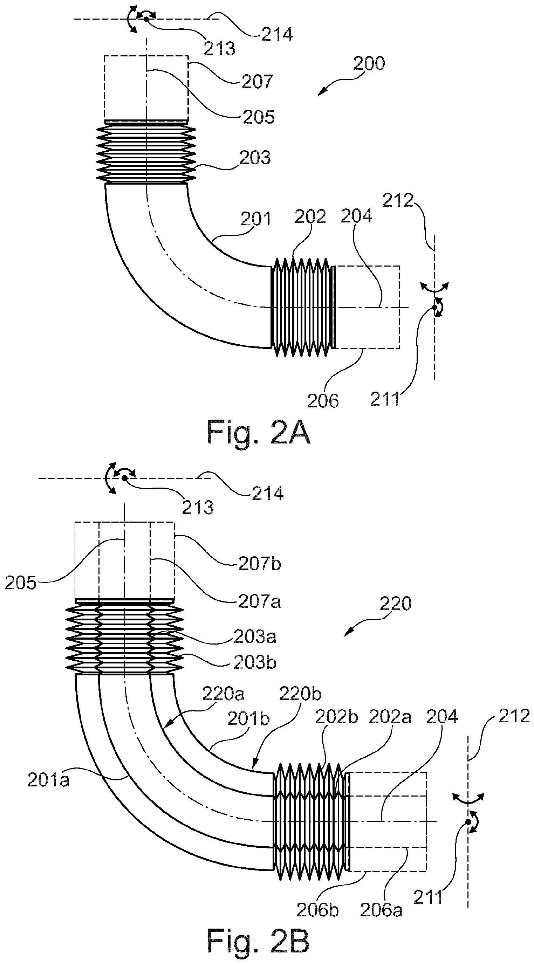

Figure 2A shows a pipe bend 200 of a transfer device 106 with five distinguishable sections. A pipe elbow section 201 forms a 90° bend. At each end of the pipe elbow section 201 a tubular bellow 202, 203, respectively, is welded in a vacuum tight manner. The tubular bellows 202, 203 are made from corrugated tubes with corrugations which are perpendicularly oriented relative to the axial extension of the bellows 202, 203. The axial extension of bellow 202, 203 is indicated as axis 204 and 205, respectively. The other end of the bellow 202 is welded to a straight rigid pipe piece 206, and the other end of the bellow 203 is welded to a straight rigid pipe piece 207 in a vacuum tight manner. The pipe bend 200 is made for example from stainless steel. The material thickness of the tubular bellows 202, 203 is chosen such that the bellows are elastically deformable. Specifically, the bellow 202 allows for angular movements of the pipe piece 206 around a first swivel axis 211, which is perpendicularly oriented in the drawing plane of Figure 2A, and around a second swivel axis 212, which lays inside the drawing plane. Likewise, the bellow 203 allows for angular movements of the pipe piece 207 around a first swivel axis 213, which is perpendicularly oriented in the drawing plane of Figure 2A, and around a second swivel axis 214, which lays inside the drawing plane. In contrast to that, the bellow 202 does not allow for rotational movement around axis 204 and the bellow 203 does not allow for rotational movement around axis 205.

It is noted that the swivel axis 211 and 213 are parallel to each other while the swivel axis 212 and 214 are perpendicular to each other. As a result, the pipe bend 200 permits an angular movement for example of pipe piece 206 around three axis having different orientations in space, for instance around axis 211, 212, and 214. Thus, if the pipe piece 206 is connected with a coupling coupled with a tank on a ship, the pipe bend 200 can compensate pitch, yaw, and roll movements of a ship with a single bend which is gas tight by construction.

The pipe bend 200 has a single wall and is therefore suitable for a transfer device with single wall transfer line. However, for cryogenic gases and other temperature sensitive fluids a single wall transfer line does not provide sufficient insulation. Therefore, vacuum insulated double wall lines are used in such cases.

Figure 2B shows a double wall pipe bend 220, which is constructed from two pipe bends inserted into each other. The pipe bends are referred to as inner pipe bend 220a and outer pipe bend 220b. The inner and outer pipe bends 220a, 220b have the same structure as pipe bend 200 that has been described with reference to Figure 2A. Therefore, corresponding components of the inner pipe bend 220a are labeled with the same reference numbers as the components in Figure 2A supplemented with the letter "a" and corresponding components of the outer pipe bend 220b are labeled with the same reference numbers as the components in Figure 2A supplemented with the letter "b". The inner pipe bend 220a is kept in position relative to the outer pipe bend 220b by distance holders that are not shown in Figure 2B. The functionality of pipe bend 220 is the same as the functionality of pipe bend 200 described in connection with Figure 2A. Specifically, the bellows 202a, 202b allow for angular movements of the pipe pieces 206a, 206b around the first swivel axis 211, which is perpendicularly oriented in the drawing plane of Figure 2B, and around the second swivel axis 212, which lays inside the drawing plane. Likewise, the bellows 203a, 203b allow for angular movements of the pipe pieces 207a, 207b around the first swivel axis 213, which is perpendicularly oriented in the drawing plane of Figure 2B, and around the second swivel axis 214, which lays inside the drawing plane. Furthermore, the bellows 202a, 202b do not allow for rotational movement around axis 204 in the bellows 203a, 203b do not allow for rotational movement around axis 205.

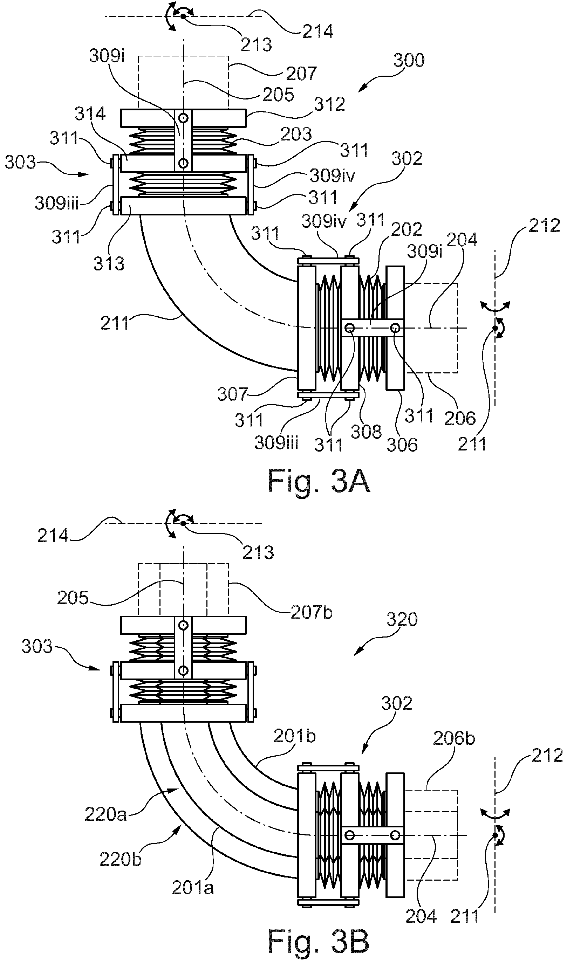

Figure 3A shows a further embodiment of a single wall pipe bend 300. The pipe bend 300 comprises all components of the pipe bend 200 and in addition to that two gimbal joints 302, 303, wherein the gimbal joint 302 is associated with bellow 202, and the gimbal joint 303 is associated with bellow 203.

The gimbal joint 302 has a flange 306, which is fixedly connected with the pipe piece 206, and a flange 307, which is fixedly connected with the pipe elbow section 201. The fixed flanges 306, 307 are connected with a movable ring 308 of the gimbal joint 302 by means of a pair of connection rods arranged on opposite circumferential positions on the fixed flanges 306, 307 and the movable ring 308.

Fixed flange 306 is connected with connection rod 309i to the movable ring 308 and a connection rod at an opposite circumferential position. Therefore, in the perspective shown in Figure 3A only one connection a 309i is visible, while the other connection rod at an opposite position relative to connection rod 309i is not visible. Fixed flange 307 is connected with connection rods 309iii and 309iiv to the movable ring 308. Each connection rod 309i-iv is movably connected by means of swivel joints 311 to the fixed flanges 306 and 307, respectively, on the one hand and to the movable ring 308 on the other hand. As a result, a swivel movement of the pipe piece 206 is constrained to the two swivel axis of swivel joints 311, which are coaxial with the axis 211 and 212. At the same time the gimbal 302 prevents any axial expansion or compression along the axis 204 or rotational movement of the pipe piece 206 around the axis 204.

The gimbal joint 303 has a flange 312, which is fixedly connected with the pipe piece 207, and a flange 313, which is fixedly connected with the pipe elbow section 201. The fixed flanges 312, 313 are connected with a movable ring 314 of the gimbal joint 303 by means of a pair of connection rods arranged on opposite circumferential positions on the fixed flanges 312, 313 and the movable ring 308.

Fixed flange 312 is connected with connection rod 309i to the movable ring 314 and a connection rod at an opposite circumferential position. Therefore, in the perspective shown in Figure 3A only one connection a 309i is visible, while the other connection rod at an opposite position relative to connection rod 309i is not visible. Fixed flange 313 is connected with connection rods 309iii and 309iiv to the movable ring 314. Each connection rod 309i-iv is movably connected by means of swivel joints 311 to the fixed flanges 312 and 313, respectively, on the one hand and to the movable ring 314 on the other hand. As a result, a swivel movement of the pipe piece 207 is constrained to the two swivel axis of swivel joints 311, which are coaxial with the axis 213 and 214. At the same time the gimbal 302 prevents any axial expansion or compression along the axis 205 or rotational movement of the pipe piece 207 around the axis 205.

The gimbal joints 302, 303 enhance the mechanical stability of pipe bend 300 compared with the pipe bend 200 while compensation of rotational movements in three dimensions is maintained. Specifically, the gimbal joints 302, 303 absorb axial loads and torsion along and around the axis 204 and 205, respectively.

Figure 3B shows a further embodiment of a pipe bend 320 according to the present disclosure, which is a combination of the double wall pipe bend 220 discussed in connection with Figure 2B and the pipe bend 300 illustrated in Figure 3A. In short, the pipe bend 320 corresponds to the pipe bend 220 which is supplemented with two gimbal joints 302, 303 that are attached with the outer pipe pieces 206b and 207b, respectively, on the one hand and with the outer pipe elbow section on the other hand. Like in the pipe bend 220 the inner tube 220a of the pipe bend 220 is kept in position by distance holders which are not shown in Figure 3B. The functionality in terms of flexibility of the double wall pipe bend 320 is the same as the functionality of single wall pipe bend 300.

Specifically, a swivel movement of the outer pipe piece 206b is constrained to the two swivel axis of swivel joints 311, which are coaxial with the axis 211 and 212. At the same time the gimbal 302 prevents any axial movement along the axis 205 or rotational movement of the pipe piece 207 around the axis 205.

Similarly, a swivel movement of the outer pipe piece 207b is constrained to the two swivel axis of swivel joints 311, which are coaxial with the axis 213 and 214. At the same time the gimbal 302 prevents any axial movement of the outer pipe piece 207b along the axis 205 or rotational movement of the pipe piece 207 around the axis 205.

The above-mentioned distance holders make sure that the inner tube 320a follows the movements of the outer tube 320b.

The need of flexible transfer lines and their inherent problems apply to any transfer device for flowable materials that can have a solid, liquid or gaseous state of aggregation. In the following any kind of flowable material irrespective of its state of aggregation will be referred to as fluid including solid powders that can be pumped and flow through transfer lines like a liquid. Fluids in this sense also include aerosols and emulsions.

Even though the present disclosure has been described mainly in connection with cryogenic fluids it is nevertheless equally applicable to other fluids, in particular to temperature sensitive fluids. The term "temperature sensitive" is to be understood in the sense that the temperature of the transferred fluid should not deviate significantly from a preferred value during transfer, i.e. the fluid should not significantly warm up or cool down.

For the sake of simplicity embodiments of the present disclosure have been described only with 90° bends. However, the subject matter of the present disclosure is not limited to a single type of bends. Therefore, the word "bend" is to be understood to encompass all other kinds of bends including spiral or freeform bended pipes, miter bend pipes and others.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

| | | | |
|---|---|---|---|
| 100 | transfer device | 300 | Pipe bend |
| 102 | Pillar | 302,303 | Gimbal joint |
| 103 | first loading arm section | 320 | Pipe bend |
| 104 | second loading arm section | | |
| 105 | third loading arm section | | |
| 106 | Loading device | | |
| 107 | base plate | | |
| 108 | Ground | | |
| 109 | reinforcement ribs | | |
| 111 | base bearing | | |
| 112 | double headed arrow | | |
| 113 | first pivot joint | | |
| 114 | double headed arrow | | |
| 116 | second pivot joint | | |
| 117 | double headed arrow | | |
| 118 | third pivot joint | | |
| 119 | double headed arrow | | |
| 121 | counterweight | | |
| 122 | transfer line | | |
| 123-126 | Rigid transfer line sections | | |
| 134 | Front end | | |
| 136-138 | Swivel joint | | |
| 200 | Pipe bend | | |
| 201 | Pipe elbows section | | |
| 202,203 | bellow | | |
| 204,205 | Axis | | |
| 206,207 | Pipe piece | | |
| 211-214 | Swivel axis | | |
| 220 | Pipe bend | | |

## Claims

1. Pipe bend for a transfer line for transferring fluid, wherein the pipe bend (200,220,300,320) comprises a pipe elbow section (201), **characterized in that**
- each end of the pipe elbow section (201) is fluidly connected with a first and a second elastic pipe section (202,203),
- each elastic pipe section (202,203) permits swiveling movements around a pair of two swivel axis (211-214) which are not parallel to each other and
- at least three swivel axis of the two pairs of swivel axis (211-214) are not parallel to each other.

2. Pipe bend according to claim 1, wherein the first and the second elastic pipe sections (202,203) are arranged between the elbow pipe section (201) and a rigid pipe section (206,207).

3. Pipe bend according to claims 1 or 2, wherein at least one swivel axis of one elastic pipe section (202,203) is perpendicularly oriented with respect to the swivel axis of the other elastic pipe section.

4. Pipe bend according to one of the preceding claims, wherein at least one elastic pipe section comprises a bellow (202,203).

5. Pipe bend according to one of the preceding claims, wherein between the elbow pipe section (201) and an adjacent rigid pipe section (202,203) a gimbal joint (302,303) is arranged, wherein the gimbal joints comprise two fixed flanges (306,307;312,313) and a movable ring (308,314), wherein one fixed flange 307,313) of the gimbal joints (302,303) is connected with the elbow pipe section (201) and the other fixed flange (306,312) of the gimbal joints is connected with the rigid pipe section (206,207).

6. Pipe bend according to one of the preceding claims, wherein the pipe bend is a multi-wall pipe bend, in particular a double-walled pipe bend.

7. Pipe bend according to claim 6, wherein the pipe bend is a double-walled pipe bend.

8. Pipe bend device according to claims 6 or 7, wherein at least two elbow pipe sections (201a,201b) are stacked into each other.

9. Pipe bend device according to claim 8, wherein between the stacked together elbow pipe sections distance holders are arranged.

10. Pipe bend according to claims 6 to 9, wherein only the outmost wall of the pipe bend (320) is connected with the fixed flanges (306,307;312,313) of the gimbal joints.

11. Transfer device for transferring fluid, wherein the transfer device comprises a transfer line with a first and a second end being fixedly connected with a first and a second structure, respectively, wherein the first and the second structure are movable relative to each other, wherein the transfer line is configured to compensate for the relative movement of the first and second structure, and wherein the transfer line comprises a pipe bend according to any one of the preceding claims.

12. Loading arm for transferring fluids between a first structure and a second structure comprising a transfer device according to claim 11.
